# EUROPÄISCHE PATENTANMELDUNG

(11) **EP 2 884 145 A1**
(43) Veröffentlichungstag der Anmeldung: **17.06.2015**
(21) Anmeldenummer: 14185709.4
(22) Anmeldetag: 22.09.2014
(51) Int. Cl.: F16L 23/08

(54) **Element einer Schellen-Flansch-Verbindung**

(30) Priorität: 16.12.2013 DE 102013114080
(71) Anmelder: NORMA Germany GmbH, 63477 Maintal (DE)
(72) Erfinder: von Breitenbach, Gerrit, 63791 Karlstein (DE); Lenz, Michael, 61137 Schöneck (DE)
(74) Vertreter: Patentanwälte Olbricht Buchhold Keulertz

(57) **Zusammenfassung**

Es wird ein Element einer Schellen-Flansch-Verbindung angegeben mit mindestens einer Fläche, die an einer Gegenfläche zur Anlage bringbar ist.

Man möchte mit geringem Aufwand hohe Spannkräfte erzeugen können.

Hierzu ist vorgesehen, dass die Fläche eine Gleitstoffschicht (26) aufweist.

## Beschreibung

Die Erfindung betrifft ein Element einer Schellen-Flansch-Verbindung mit mindestens einer Fläche, die an einer Gegenfläche zur Anlage bringbar ist.

Die Erfindung wird im Folgenden anhand einer "Kegelflanschverbindung" erläutert.

Bei einer Kegelflanschverbindung weist jedes der beiden zu verbindenden Bauteile an den zu verbindenden Enden einen radial nach außen weisenden Flansch auf, der eine geneigte Rückseite aufweist. Wenn die beiden Bauelemente miteinander in Kontakt gebracht worden und die Flansche zueinander ausgerichtet worden sind, dann kann eine Profilschelle auf die Flansche aufgesetzt werden, so dass die Innenseiten der Flanken an den geneigten Rückseiten der Flansche anliegen. Wenn das Schellenband dann mit Hilfe der Spanneinrichtung gespannt wird, dann verringert sich der Innendurchmesser des Schellenbandes und die Flanken bewegen sich auf den geneigten Seiten der Flansche radial nach innen. Dadurch wird eine Spannkraft in axialer Richtung erzeugt, die die beiden Bauteile gegeneinander verspannt.

Eine hierfür geeignete Profilschelle ist beispielsweise aus DE 10 2009 039 862 B4 bekannt.

Wenn man höhere Axialkräfte erzeugen möchte, beispielsweise zum sicheren Verpressen einer Dichtung zwischen den beiden Bauelementen, muss man in der Regel eine größere oder stärker dimensionierte Profilschelle verwenden, so dass zum Erzeugen höherer Axialkräfte auch ein höherer Aufwand notwendig ist.

Der Erfindung liegt die Aufgabe zugrunde, mit geringem Aufwand hohe Spannkräfte zu erzeugen.

Diese Aufgabe wird bei einem Element der eingangs genannten Art dadurch gelöst, dass die Fläche eine Gleitstoffschicht aufweist.

Die Gleitstoffschicht setzt die Reibung zwischen der Fläche und der Gegenfläche, im Beispiel der Kegelflanschverbindung den Innenseiten der Flanken und den Oberflächen der Flansche, an denen die Flanken anliegen, herab. Damit benötigt man zum einen weniger Spannkraft, um die Flanken radial nach innen zu bewegen, weil die zu überwindende Reibung geringer ist. Auf diese Weise kann ein größerer Teil der durch die Spanneinrichtung erzeugten Spannkraft in eine Axialkraft umgewandelt werden. Zum anderen hat die Gleitstoffschicht den Vorteil, dass die Axialkräfte in Umfangsrichtung der Profilschelle gleichmäßiger verteilt werden. Beim Spannen des Schellenbandes mit Hilfe der Spanneinrichtung bewegen sich die Flanken nicht nur radial einwärts auf den Flanschen, sondern es ist auch eine kleine Bewegung in Umfangsrichtung des Schellenbandes erforderlich. Da auch diese Bewegung durch die Gleitstoffschicht erleichtert wird, kann die durch die Spanneinrichtung erzeugte Spannkraft auch an weiter von der Spanneinrichtung entfernten Positionen wirken. Es lässt sich also eine relativ gleichmäßige Verteilung der generierten Axialkraft über den Schellenumfang erzeugen. Die Gleitstoffschicht bewirkt, dass die Reibung zwischen den Innenseiten der Flanken und den Seiten der Flansche, an denen die Flanken anliegen, geringer ist als ohne Gleitstoffschicht. Da die Gleitstoffschicht vielfach das Material der Flanken von dem Material der Flansche trennt, wird die Gefahr von Kontaktkorrosion vermindert und es ergibt sich eine verbesserte Korrosionsbeständigkeit. Insgesamt ergibt sich ein stabileres, sicheres Prozessfenster für die Montage und den Betrieb der Profilschelle durch eine gute Reproduzierbarkeit einer mit der Profilschelle realisierten Kegelflanschverbindung.

Vorzugsweise ist das Element als Profilschelle mit einem Schellenband ausgebildet, das eine Basis und radial einwärts gerichtete Flanken mit Innenseiten aufweist, und einer Spanneinrichtung, wobei das Schellenband zumindest auf der Innenseite der Flanken die Gleitstoffschicht aufweist. Wenn die Profilschelle auf die Flansche aufgesetzt wird, dann liegen die Innenseite der Profilschelle und die Außenseite der Flansche aneinander an. Durch die Gleitstoffschicht ergibt sich die gewünschte Reibungsverminderung.

Vorzugsweise weist auch die Basis an ihrer Innenseite die Gleitstoffschicht auf. Dies erleichtert die Herstellung der Profilschelle. Man kann die Innenseite insgesamt mit der Gleitstoffschicht versehen.

Hierbei ist bevorzugt, dass das Schellenband auch an seiner Außenseite die Gleitstoffschicht aufweist. Man kann die Gleitstoffschicht dann einfach dadurch auftragen, dass das Schellenband in eine Lösung eingetaucht wird, die dann die Gleitstoffschicht ausbildet. Damit werden die Produktionskosten klein gehalten.

Alternativ oder zusätzlich kann das Element auch als Flansch ausgebildet sein. In diesem Fall befindet sich die Gleitstoffschicht an der Außenseite des Flansches, an der die Schelle anliegt. Auch eine derartige Ausbildung schafft dann eine verminderte Reibung, so dass die Spannkräfte in einem größeren Umfang in Axialkräfte umgesetzt werden können.

Schließlich ist es auch möglich, alternativ oder zusätzlich das Element als Zwischenelement zwischen der Schelle und dem Flansch auszubilden. In diesem Fall benötigt man zwar ein zusätzliches Element. Dieses zusätzliche Element kann aber in vorteilhafter Weise auch bei herkömmlichen Schellen-Flansch-Verbindungen eingesetzt werden, bei denen bislang noch keine Maßnahmen zur Reibungsverminderung getroffen worden sind.

Vorzugsweise ist die Gleitstoffschicht nicht flüchtig. Die Gleitstoffschicht bleibt also auch nach einer längeren Lagerung noch vorhanden, ohne ihre Gleiteigenschaften eingebüßt zu haben. Dies erleichtert die Bevorratung.

Vorzugsweise ist die Gleitstoffschicht bis zu einer vorbestimmten Temperatur beständig. Die vorbestimmte Temperatur richtet sich nach der beabsichtigten Verwendung. Wenn die Profilschelle beispielsweise verwendet wird, um Teile eines Abgasstranges eines Verbrennungsmotors miteinander zu verbinden, dann kann die Gleitstoffschicht beispielsweise bis zu einer Temperatur von mindestens 1000° C beständig ausgelegt werden. Sie verhindert dann ein "Verbacken" der Profilschelle mit den Flanschen.

Vorzugsweise ist die Gleitstoffschicht als trockene Schicht ausgebildet. Eine trockene Schicht hat den Vorteil, dass sie bei Berührung anderer Teile keine Spuren hinterlässt. Darüber hinaus ist die Gefahr gering, dass Staub oder Fremdkörper an der Gleitstoffschicht festkleben und somit der Reibungsverminderung entgegenwirken. Außerdem wird die Bevorratung erleichtert.

Hierbei ist bevorzugt, dass die Gleitstoffschicht als Trockenschmierstoff ausgebildet ist. Ein Trockenschmierstoff lässt ein reibungsarmes Gleiten zu, ohne dass er als schmierig, pastös oder nass empfunden wird.

Bevorzugterweise ist die Gleitstoffschicht als Festschmierstoff ausgebildet. In diesem Fall macht man sich reibungsvermindernde Wirkungen von Festschmierstoff, beispielsweise Graphit, Zinn oder Molybdänsulfid zunutze.

In einer alternativen oder zusätzlichen Ausgestaltung kann die Gleitstoffschicht als Lackschicht ausgebildet sein. Eine Lackschicht lässt sich leicht aufbringen.

Schließlich ist es auch möglich, dass die Gleitstoffschicht einen Kunststoff aufweist. Als Kunststoff kann man beispielsweise Polytetrafluorethylen (PTFE) verwenden. Weiterhin kommen Werkstoffe aus der Gruppe der hochfesten thermoplastischen Kunststoffe auf der Basis von Polyaryletherketonen, insbesondere Polyetheretherketonen, Polyamiden, Polyacetalen, Polyarylether, Polyethylenterephtalaten, Polyphenylensulfiden, Polysulfonen, Polyethersulfonen, Polyetherimiden, Polyamidimiden, Polyacrylaten, Phenol-Harzen, wie Novolack-Harzen oder Ähnliches in Betracht. Bei derartigen Kunststoffen ergibt sich ein hervorragendes Gleitverhalten der Flanken auf den Flanschen.

In einer bevorzugten Ausgestaltung ist die Gleitstoffschicht als Folie oder Film ausgebildet.

Die Erfindung wird im Folgenden anhand eines bevorzugten Ausführungsbeispiels in Verbindung mit der Zeichnung beschrieben. Hierin zeigen:
- Fig. 1: eine schematische Darstellung einer Profilschelle und
- Fig. 2: eine schematische Schnittansicht einer Kegelflanschverbindung.

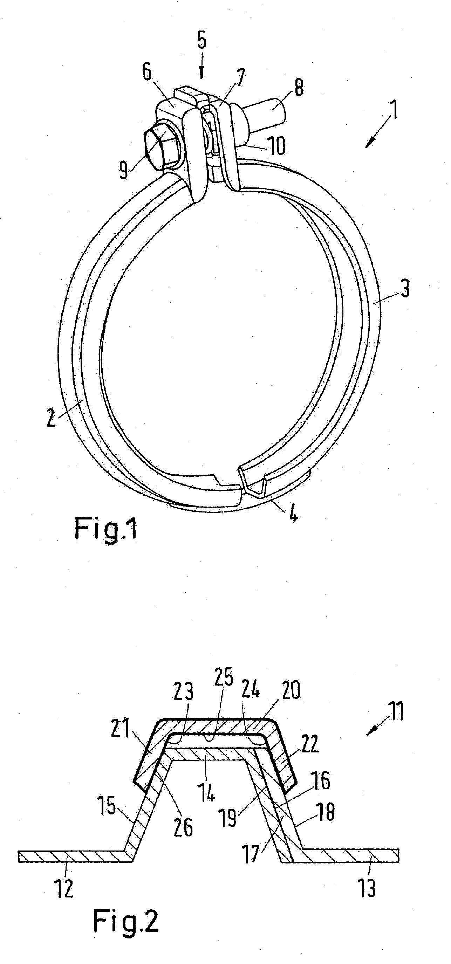

Fig. 2 zeigt in stark schematisierter Darstellung einen Ausschnitt einer Kegelflanschverbindung 11, die ein erstes Bauelement 12 mit einem zweiten Bauelement 13 verbindet. Bei den beiden Bauelementen 12, 13 kann es sich beispielsweise um Rohre oder Rohrstutzen handeln.

Das erste Bauelement 12 weist einen radial nach außen ragenden Flansch 14 auf, der an seiner vom zweiten Bauelement 13 abgewandten Rückseite 15 geneigt ist. Der Flansch 14 ist hier im Querschnitt trapezförmig ausgebildet, d.h. er ist auf seiner dem zweiten Bauelement 13 zugewandten Vorderseite 16 ebenfalls geneigt.

Das zweite Bauelement 13 weist ebenfalls einen Flansch 17 auf. Dieser Flansch weist eine vom ersten Bauelement abgewandte Rückseite 18 auf und eine dem ersten Bauelement 12 zugewandte Vorderseite 19. Die Neigung der Vorderseite 16 des ersten Flansches 14 und die Neigung der Vorderseite 19 des zweiten Flansches 17 entsprechen einander, so dass die beiden Flansche 14, 17 ohne Zwischenraum aneinander angelegt werden können.

Die Flansche 14, 17 können auch auf andere Weise ausgebildet sein, beispielsweise mit ebenen Vorderseiten.

Zur Verbindung der beiden Flansche 14, 17 ist eine Profilschelle 1 vorgesehen, die in Fig. 1 perspektivisch dargestellt ist.

Die Profilschelle 1 weist ein Schellenband auf, das im vorliegenden Fall mit zwei Schellenabschnitten 2, 3 ausgebildet ist. Es ist möglich, mehr als zwei Schellenabschnitte 2, 3 zu verwenden. Es ist auch möglich, das Schellenband einteilig auszubilden.

Die beiden Schellenabschnitte 2, 3 sind durch eine Brücke 4 miteinander verbunden, wobei die Brücke 4 federnd ausgebildet ist.

Die Brücke 4 ist an einem Ende der Schellenabschnitte 2, 3 in Umfangsrichtung angeordnet. Am anderen Ende der Schellenabschnitte 2, 3 ist eine Spanneinrichtung 5 vorgesehen. Der Schellenabschnitt 2 weist hier einen Spannkopf 6 auf. Der Schellenabschnitt 3 weist hier einen Spannkopf 7 auf. Die beiden Spannköpfe 6, 7 sind durch einen Schraubbolzen 8 miteinander verbunden, der auf einer Seite einen Kopf 9 aufweist und mit seinem anderen Ende durch eine Mutter 10 geschraubt ist. Andere Formen von Spanneinrichtungen sind natürlich möglich.

Zur Montage der Profilschelle wird der Schraubbolzen 8 aus der Mutter 10 herausgeschraubt, so dass die beiden Schellenabschnitte 2, 3 auf der der Brücke 4 gegenüberliegenden Seite voneinander weg bewegt werden können. Die Profilschelle 1 kann dann über zu verbindende Teile geführt werden. Der Schraubbolzen 8 wird in die Mutter 10 eingeschraubt. Beim Schrauben bewegen sich die beiden Spannbacken 6, 7 aufeinander zu, so dass sich der Innendurchmesser des Schellenbandes verringert.

Wie oben erwähnt, weist die Profilschelle 1 ein Schellenband auf, das in Fig. 2 im Querschnitt dargestellt ist. Das Schellenband weist eine Basis 20 und radial nach innen oder einwärts gerichtete Flanken 21, 22 auf. Die Flanken 21, 22 gehen von der Basis 20 aus und sind vorzugsweise einstückig mit der Basis 20 ausgebildet. Sie können beispielsweise von der Basis 20 abgebogen sein.

Die Flanken 21, 22 weisen Innenseiten 23, 24 auf. Die Basis 20 weist eine Innenseite 25 auf.

Wenn die beiden Bauelemente 12, 13 so zueinander ausgerichtet worden sind, dass die beiden Flansche 14, 17, wie dargestellt, aneinander anliegen, dann kann die Profilschelle über die beiden Flansche 14, 17 gelegt werden, so dass die Flanken 21, 22 mit ihren Innenseiten 23, 24 an den beiden Rückseiten 15, 18 der Flansche 14, 17 anliegen. Wenn das Schellenband dann mit Hilfe der Spanneinrichtung 5 gespannt wird und sich der Innendurchmesser des Schellenbandes verringert, dann wandern die beiden Flanken 21, 22 auf den Rückseiten 15, 18 der Flansche 14, 17 radial nach innen, so dass eine axial wirkende Kraft auf die beiden Flansche 14, 17 ausgeübt wird, die die beiden Bauelemente 12, 13 in Axialrichtung gegeneinander presst.

Zumindest die Innenseiten 23, 24 der Flanken 21, 22 sind mit einer Gleitstoffschicht 26 bedeckt. Diese Gleitstoffschicht 26 ist hier als dicke schwarze Linie dargestellt, wobei diese Darstellung nicht maßstäblich ist.

Bevorzugterweise sind nicht nur die Innenseiten 23, 24 der Flanken 21, 22 mit der Gleitstoffschicht bedeckt, sondern auch die Innenseite 25 der Basis 20.

In einer besonders bevorzugten Ausgestaltung kann sogar das ganze Schellenband eine Gleitstoffschicht aufweisen, die dann beispielsweise durch einen Tauchvorgang aufgetragen worden sein kann. Dies ist in der schematischen Darstellung der Fig. 2 zu erkennen.

Die Gleitstoffschicht kann auch auf andere Weise aufgetragen werden, beispielsweise durch Aufspritzen oder Aufsprühen oder durch Abscheiden aus elektrolytischen oder chemischen Bädern, in denen die Profilschelle 1 beispielsweise Ni-Sn-Schichten, Sn-Schichten, Phosphat-Schichten oder dergleichen aufnehmen kann.

Durch die Gleitstoffschicht 26 werden mehrere Effekte erreicht: zum einen wird die Reibung bei der Bewegung der Flanken 21, 22 auf den Flanschen 14, 17 radial nach innen herabgesetzt. Die Gleitstoffschicht 26 bewirkt, dass die Reibung zwischen den Innenseiten 23, 24 und den Rückseiten 15, 18 geringer ist als wenn man die Flanken 21, 22 unmittelbar mit den Flanschen 14, 17 in Kontakt bringt. Aus diesem Grund kann ein größerer Anteil der über die Spanneinrichtung 5 erzeugten Spannkraft in eine axial wirkende Kraft umgesetzt werden, die die beiden Bauteile 12, 13 gegeneinander presst. Eine Vergrößerung oder eine stärkere Dimensionierung der Profilschelle 1 oder der Spanneinrichtung ist hierfür nicht erforderlich.

Zum anderen bewirkt die Gleitstoffschicht 26 auch eine bessere Verteilung der über die Spanneinrichtung 5 erzeugten Spannkraft in Umfangsrichtung, weil die Profilschelle aufgrund der Gleitstoffschicht 26 auch bei einer Bewegung der Flanken 21, 22 relativ zu den Flanschen 14, 17 in Umfangsrichtung eine geringere Reibung überwinden muss. Eine derartige Bewegung ergibt sich beim Spannen der Spanneinrichtung 5 automatisch. Ohne die Gleitstoffschicht 26 kann man einen erhöhten Anteil der Axialkraft in der Nachbarschaft der Spanneinrichtung 5 beobachtet. Mit der Gleitstoffschicht 26 wird die Verteilung der Axialkraft in Umfangsrichtung gleichmäßiger und die axiale Spannkraft der Profilschelle 1 wird bei ansonsten gleicher durch die Spanneinrichtung 5 eingeleiteter Kraft deutlich höher ausfallen.

Wenn die Gleitstoffschicht 26 als trennende Schicht ausgebildet ist, dann verhindert sie einen unmittelbaren Kontakt zwischen den Flanken 21, 22 und dem Flanschen 14, 17, so dass die Gefahr eine Kontaktkorrosion geringer ist.

Die Gleitstoffschicht 26 ist vorzugsweise nicht flüchtig. Sie bleibt also auch bei einer längeren Lagerung erhalten und entfaltet bei der Montage ihre reibungsvermindernde Wirkung.

Wenn die Profilschelle 1 in einem Bereich mit einer erhöhten Temperatur eingesetzt werden soll, ist es in Abhängigkeit von der gewünschten Anwendung gegebenenfalls von Vorteil, wenn die Gleitstoffschicht 26 bis zu einer vorbestimmten Temperatur beständig ist. Ein derartiger Fall tritt beispielsweise dann auf, wenn die Profilschelle verwendet wird, um Teile einer Abgasstranganlage eines Verbrennungsmotors miteinander zu verbinden. In diesem Fall kann es von Vorteil sein, wenn die Gleitstoffschicht 26 bis zu einer Temperatur von beispielsweise mindestens 1000° C beständig ist. In diesem Fall wird ein "Verbacken" der Profilschelle 1 mit den Teilen der Abgasstranganlage verhindert und ein Austausch der Profilschelle 1 erleichtert.

Die Gleitstoffschicht 26 ist als trockene Schicht ausgebildet, d.h. sie hinterlässt keine Spuren, wenn sie mit anderen Teilen oder mit der Hand eines Monteurs in Berührung kommt. Vorzugsweise ist sie als Trockenschmierstoff ausgebildet worden.

Sie kann auch als Feststoffbasierte Schicht, beispielsweise graphitbasierte Schicht, ausgebildet sein.

Die Gleitstoffschicht 26 kann auch als Lackschicht, Folie oder Film ausgebildet sein.

Die Gleitstoffschicht 26 kann Molybdänsulfid aufweisen.

Die Gleitstoffschicht 26 kann einen Kunststoff aufweisen, beispielsweise Polytetrafluorethylen oder Werkstoffe aus der Gruppe der hochfesten thermoplastischen Kunststoffe auf der Basis von Polyaryletherketonen, insbesondere Polyetheretherketonen, Polyamiden, Polyacetalen, Polyarylether, Polyethylenterephtalaten, Polyphenylensulfiden, Polysulfonen, Polyethersulfonen, Polyetherimiden, Polyamidimiden, Polyacrylaten, Phenol-Harzen, wie Novolack-Harzen oder Ähnliches.

Natürlich kann die Gleitstoffschicht 26 nicht nur an der Profilschelle 1 ausgebildet sein. Man kann auch die Flansche 14, 17 zumindest an ihren Rückseiten 15, 18 mit einer entsprechenden Gleitstoffschicht versehen und erreicht damit die gleiche Wirkung, nämlich eine geringe Reibung zwischen der Profilschelle und den Flanschen 14, 17 beim Spannen der Profilschelle 1.

Schließlich ist es auch möglich, in nicht näher dargestellter Weise ein Zwischenelement zwischen den Flanken 21, 22 und den Rückseiten 15, 18 der Flansche 14, 17 einzubringen. Man kann dieses Zwischenelement mit einer Gleitstoffschicht versehen oder dieses Zwischenelement dann aus einem Gleitstoff bilden, so dass auch hier eine Gleitstoffschicht vorhanden ist, um die Reibung zwischen den Flanken 21, 22 und den Rückseiten 15, 18 der Flansche 14, 17 klein zu halten.

## Patentansprüche

1. Element einer Schellen-Flansch-Verbindung mit mindestens einer Fläche, die an einer Gegenfläche zur Anlage bringbar ist, **dadurch gekennzeichnet, dass** die Fläche eine Gleitstoffschicht (26) aufweist.

2. Element nach Anspruch 1, **dadurch gekennzeichnet, dass** es als Profilschelle (1) mit einem Schellenband (2, 3) ausgebildet ist, das eine Basis (20) und radial einwärts gerichtete Flanken (21, 22) mit Innenseiten (23, 24) aufweist, und einer Spanneinrichtung (5), wobei das Schellenband (2, 3) zumindest auf der Innenseite (23, 24) der Flanken (21, 22) die Gleitstoffschicht (26) aufweist.

3. Element nach Anspruch 2, **dadurch gekennzeichnet, dass** auch die Basis (20) an ihrer Innenseite (25) die Gleitstoffschicht (26) aufweist.

4. Element nach Anspruch 3, **dadurch gekennzeichnet, dass** das Schellenband (2, 3) auch an seiner Außenseite die Gleitstoffschicht (26) aufweist.

5. Element nach einem der Ansprüche 1 bis 4, **dadurch gekennzeichnet, dass** es als Flansch ausgebildet ist.

6. Element nach einem der Ansprüche 1 bis 5, **dadurch gekennzeichnet, dass** es als Zwischenelement zwischen der Schelle und dem Flansch ausgebildet ist.

7. Element nach einem der Ansprüche 1 bis 6, **dadurch gekennzeichnet, dass** die Gleitstoffschicht (26) nicht flüchtig ist.

8. Element nach einem der Ansprüche 1 bis 7, **dadurch gekennzeichnet, dass** die Gleitstoffschicht (26) bis zu einer vorbestimmten Temperatur beständig ist.

9. Element nach einem der Ansprüche 1 bis 8, **dadurch gekennzeichnet, dass** die Gleitstoffschicht (26) als trockene Schicht ausgebildet ist.

10. Element nach Anspruch 9, **dadurch gekennzeichnet, dass** die Gleitstoffschicht (26) als Trockenschmierstoff ausgebildet ist.

11. Element nach einem der Ansprüche 1 bis 10, **dadurch gekennzeichnet, dass** die Gleitstoffschicht (26) als Festschmierstoff ausgebildet ist.

12. Element nach einem der Ansprüche 1 bis 11, **dadurch gekennzeichnet, dass** die Gleitstofifschicht (26) als Lackschicht ausgebildet ist.

13. Element nach einem der Ansprüche 1 bis 12, **dadurch gekennzeichnet, dass** die Gleitstofifschicht (26) einen Kunststoff aufweist.

14. Element nach einem der Ansprüche 1 bis 11 oder 13, **dadurch gekennzeichnet, dass** die Gleitstofifschicht (26) als Folie oder Film ausgebildet ist.
